# EUROPÄISCHE PATENTSCHRIFT

(11) **EP 1 653 310 B1**
(45) Veröffentlichungstag und Bekanntmachung des Hinweises auf die Patenterteilung: **08.01.2014**
(21) Anmeldenummer: 05109812.7
(22) Anmeldetag: 21.10.2005
(51) Int. Cl.: G06K 9/00, G05D 1/02

(54) **Verfahren zur Spurführung eines straßengebundenen Fahrzeugs**
Guidance method for a road-bound vehicle
Procédé destiné à un dispositif de guidage d 'un véhicule routier

(30) Priorität: 27.10.2004 DE 102004052127
(43) Veröffentlichungstag der Anmeldung: 03.05.2006
(73) Patentinhaber: Hella KGaA Hueck & Co., 59552 Lippstadt (DE)
(72) Erfinder: Mühlenberg, Martin, 59494 Soest (DE)

(56) Entgegenhaltungen:
- DE-A1- 10 311 240
- US-A- 6 038 496

## Beschreibung

Die Erfindung bezieht sich auf ein Verfahren zur Spurführung eines straßengebundenen Fahrzeugs mit einer an einer definierten Position am Fahrzeug angeordneten Kamera und einer Bildverarbeitungseinheit zur Verarbeitung der mit der Kamera aufgenommenen Bilder.
Dabei werden im Standardfall (= Straßenabschnitte ohne Baustellen-und/oder Gefahrenbereiche) permanente Markierungen, welche die Fahrbahnen der Straße begrenzen, erfasst und ausgewertet werden, wobei in einer Auswerteeinheit aus der relativen Lage des Fahrzeuges in bezug auf die erkannten permanenten Markierungen ein Steuersignal für die Querführung des Fahrzeuges abgeleitet wird. Bei dem Steuersignal für die Querführung des Fahrzeuges kann es sich um ein Warnsignal für den Fahrer und/oder um ein Lenksignal für eine automatische Lenkung handeln.

In Deutschland beispielsweise bestehen die permanenten Markierungen aus durchgezogenen oder unterbrochenen weißen Linien. Dabei wird standardmäßig die relative Lage des Fahrzeuges, insbesondere der Querabstand, in bezug auf die in Fahrtrichtung linke und rechte Markierung, welche die Fahrbahn begrenzen, bestimmt. Wenn das Fahrzeug sich dann der linken oder rechten Markierung bei Unterschreitung eines vorgegebenen Mindestabstandes nähert oder eine Markierung überfährt (berührt), wird im Standardfall automatisch ein Warnsignal für den Fahrer und/oder ein Lenksignal für einen automatischen Lenkeingriff generiert.

In Baustellen-und/oder Gefahrenbereichen einer Straße (= Ausnahmefall) kommen nun zu den permanenten Markierung noch temporäre Markierungen hinzu, welche die geänderte Verkehrsführung im Baustellen-/Gefahrenbereich kennzeichnen sollen. Für das standardmäßige Spurführungsverfahren stellen diese zusätzlichen, konkurrierenden Markierungen eine Störung dar, da plötzlich nicht mehr zwei Markierungen zu erfassen und auszuwerten sind, sondern drei oder mehr.

In der DE 103 11 240 A1 wird für die Spurführung in Baustellen- und Gefahrenbereichen vorgeschlagen, zu überprüfen, ob es sich bei erkannten Markierungen um permanente Markierungen oder temporäre, d.h. baustellen-/gefahrbereichspezifische, Markierungen handelt. Dabei soll dann die Spurführung in Baustellen-und/oder Gefahrenbereichen nur noch in Abhängigkeit der temporären Markierungen erfolgen. Zur Unterscheidung zwischen temporären und permanenten Markierungen wird in der DE 103 11 240 A1 vorgeschlagen, die unterschiedlichen Markierungen an ihrer- in Deutschland und einigen anderen Ländern - unterschiedlichen Farbe zu erkennen. Allerdings ist die unterschiedliche Farbkennzeichnung nicht in allen Ländern gleich, so daß diese Art der Unterscheidung in nachteiliger Weise immer länderspezifisch ist und dementsprechend eine länderspezifische Anpassung der Spurführungssysteme erforderlich macht. Außerdem sind in manchen Ländern permanente und temporäre Markierungen sogar einheitlich weiß, wodurch eine derartige Unterscheidung unmöglich wird. Darüber hinaus setzt diese Art der Unterscheidung den Einsatz einer teueren Farbkamera im Vergleich zu einer günstigeren Schwarz-/Weiß-Kamera voraus, wobei die Verarbeitung von Farbinformationen in der nachgeschalteten Bildverarbeitung zudem sehr aufwendig ist.

In der DE 103 11 240 A1 wird quasi vorgeschlagen, auch in Baustellen- und Gefahrenbereichen standardgemäß die Spurführung über den Abstand des Fahrzeuges von einer linken und einer rechten Markierung durchzuführen, wobei lediglich von den permanenten Markierungen auf die dann nur noch relevanten temporären Markierungen für die Bewertung umgeschaltet wird. Problematisch dabei ist jedoch, daß eine Unterscheidung zwischen der Art der Markierung (temporär oder permanent) aufwendig ist und nicht immer zuverlässig gewährleistet werden kann.

Aufgabe der Erfindung ist es, ein Verfahren zur Spurführung eines straßengebundenen Fahrzeugs zu entwickeln, mit dem in zuverlässiger und kostengünstiger Weise sowohl im Standardfall (= Straßenabschnitt ohne Baustellen-und/oder Gefahrenbereiche) als auch im Ausnahmefall (= Baustellen-und/oder Gefahrenbereiche einer Straße) eine Spurführung bewirkt wird.

Diese Aufgabe wird erfindungsgemäß dadurch gelöst, daß im Ausnahmefall (= Baustellen-und/oder Gefahrenbereiche einer Straße) neben den permanenten Markierungen auch temporäre Markierungen im Baustellen- und/oder Gefahrenbereich erfasst und ausgewertet werden, wobei dann in der Auswerteeinheit das Steuersignal für die Querführung des Fahrzeuges aus der relativen Lage des Fahrzeuges in bezug auf ein Markierungsmuster aus permanenten und temporären Markierungen abgeleitet wird. Im Unterschied zum Spurführungsverfahren gemäß DE 103 11 240 A1 wird im erfindungsgemäßen Verfahren in Baustellen-und/oder Gefahrenbereiche einer Straße nicht mehr von dem dem Standardfall zugrundeliegende Modell ausgegangen, zwischen relevanten Markierungen, und zwar einer erkannten linken und einer erkannten rechten Markierung, eine erlaubte Fahrbahn zu definieren. Beim erfindungsgemäßen Verfahren sind in Baustellen- und/oder Gefahrenbereichen einer Straße alle Markierungen (permanente und temporäre) relevant und gleichwertig. Es wird in Baustellen- und/oder Gefahrenbereichen einer Straße nicht mehr eine erlaubte Fahrbahn zwischen zwei Markierungen ermittelt, sondern ein Markierungsmuster aus allen Markierungen generiert. Dabei bringt der Fahrer beim Einfahren in den Baustellen-und/oder Gefahrenbereich einer Straße sein Fahrzeug selbst in die korrekte Position auf der durch die veränderte Verkehrsführung veränderten Fahrbahn. Der Fahrer bestimmt also selbst die Soll-Lage seines Fahrzeuges im Baustellen-und/oder Gefahrenbereich einer Straße. Dieser Soll-Lage wird dann ein Initialisierungs-Markierungsmuster zugeordnet. Wenn das Fahrzeug dann im weiteren Straßenverlauf des Baustellen-und/oder Gefahrenbereiches z.B. durch Unachtsamkeit des Fahrers von der Soll-Lage abkommt, so ändert sich dementsprechend das aktuelle Markierungsmuster. Erfindungsgemäß wird dann das Steuersignal für die Querführung des Fahrzeuges im Baustellen-und/oder Gefahrenbereich einer Straße aus einer Abweichung des aktuellen Markierungsmusters vom Initialisierungs-Markierungsmuster abgeleitet. Beim erfindungsgemäßen Verfahren wird in vorteilhafter Weise die menschliche Interpretationsfähigkeit komplexer Verkehrsszenen für die Festlegung des Initialisierungs-Markierungsmusters in Baustellen-und/oder Gefahrenbereichen verwendet.

Anhand der beigefügten Zeichnungen soll die Erfindung nachfolgend näher erläutert werden. Es zeigt:
- Figur 1: eine Blockschaltbild eines Spurführungssystems zur Durchführung des Verfahrens,
- Figur 2+3: jeweils einen Straßenverlauf im Übergang von einem Straßenabschnitt ohne Baustellen-/Gefahrenbereiche in einen Baustellen-/Gefahrenbereich mit geänderter Verkehrsführung,

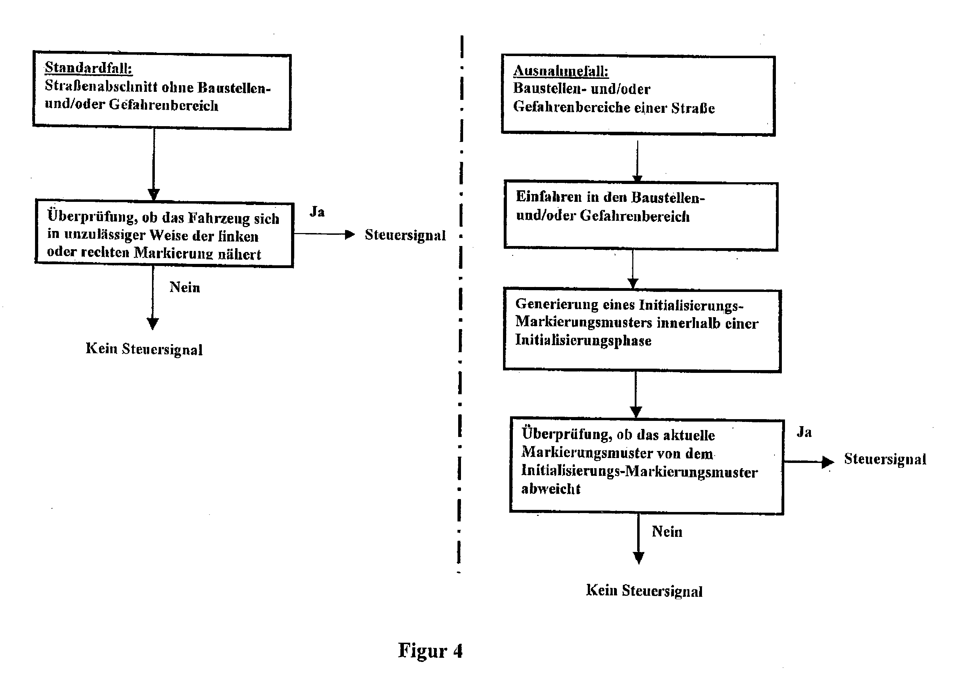

- Figur 4: jeweils ein Flussdiagramm für den Verfahrensablauf im Standardfall und im Ausnahmefall.

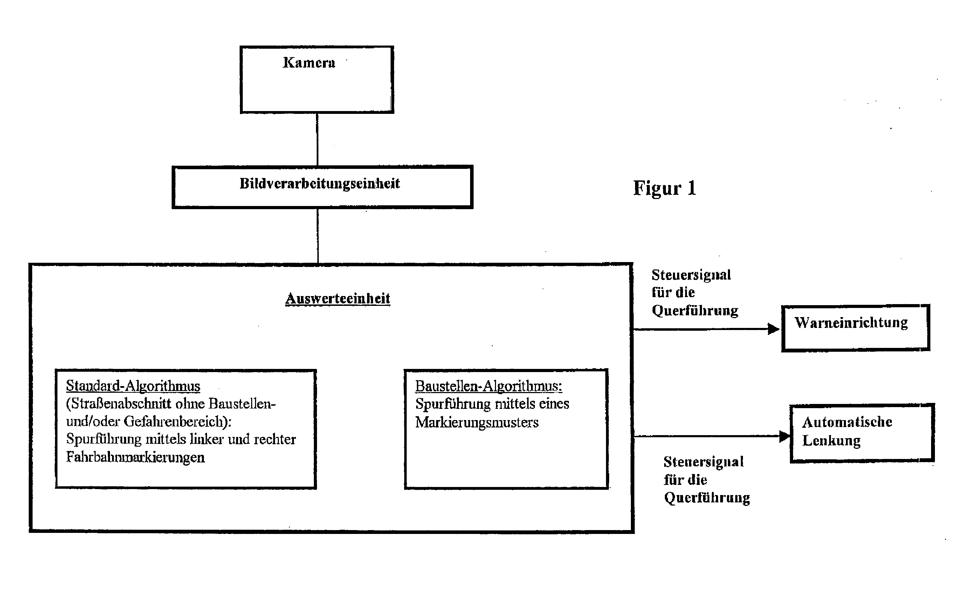

In Figur 1 ist ein Blockschaltbild eines Spurführungssystems zur Durchführung des Verfahrens dargestellt. Das Spurführungssystem umfasst eine Kamera (Digitalkamera), die beispielsweise im Fahrzeuginnenraum hinter der Frontscheibe angeordnet ist und dessen Erfassungsbereich/optische Achse in Fahrtrichtung nach vorn und leicht geneigt auf die Straße ausgerichtet ist. Dabei ist die Kamera bezogen auf die Querrichtung in der Mitte der Frontscheibe angeordnet, so daß die optische Achse der Kamera in der Projektion auf die Straße der durch die Fahrzeugmitte gehenden Fahrzeuglängsrichtung entspricht.

Der Kamera nachgeschaltet ist eine Bildverarbeitungseinheit zur Verarbeitung der mit der Kamera aufgenommenen digitalen Bilddaten. Mittels der Bildverarbeitungseinheit werden aus den Bilddaten die Straßenmarkierungen, beispielsweise durchgehende und/oder unterbrochene Linien auf der Straße extrahiert. Darüber hinaus umfasst das Spurführungssystem eine Auswerteeinheit, um anhand der Bildinformationen Steuersignale für die Querführung des Fahrzeuges abzuleiten. In der Auswerteeinheit ist sowohl ein Standard-Algorithmus für die Spurführung implementiert, der in Straßenabschnitten ohne Baustellen- und/oder Gefahrenbereichen eine Spurführung mittels der Orientierung an der linken und rechten Fahrbahnmarkierungen ermöglicht, als auch ein sogenannter Baustellen-Algorithmus, der in Baustellen-/Gefahrenbereichen eine Spurführung mittels eines Markierungsmusters aus permanenten und temporären Markierungen ermöglicht. Die Bildverarbeitungseinheit und die Auswerteeinheit können selbstverständlich auch in einer einzigen Einheit integriert sein.

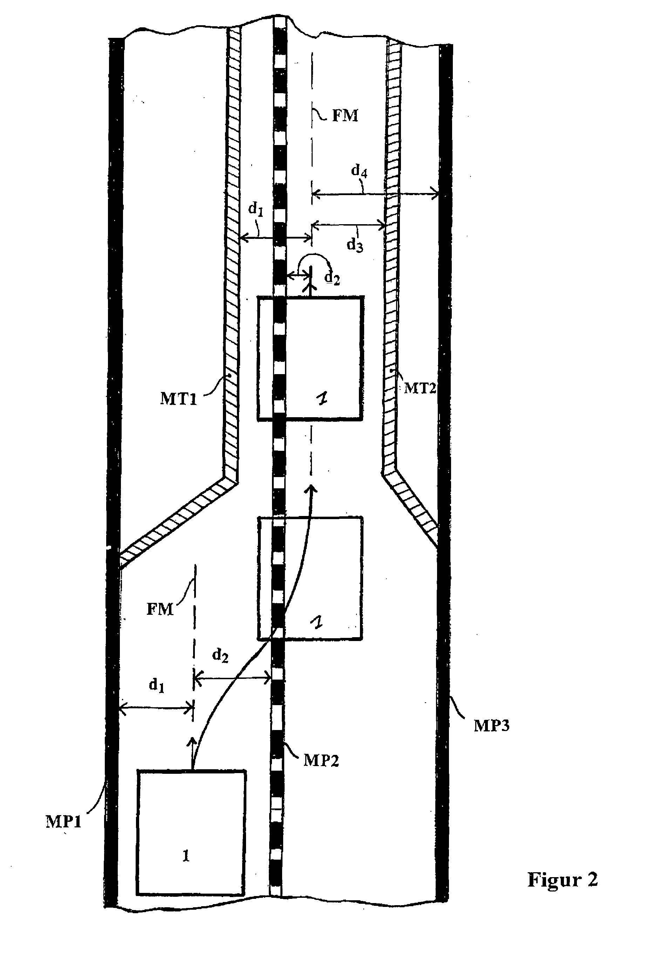

Figur 2 zeigt einen typischen Straßenverlauf im Übergang von einem Straßenabschnitt ohne Baustellen-/Gefahrenbereiche in einen Baustellen-/Gefahrenbereich mit geänderter Verkehrsführung. Es ist eine Straße mit zwei Fahrbahnen dargestellt, die durch die durchgezogenen Linien (MP1, MP3) sowie die unterbrochene Linie (MP2) als permanente Markierungen gekennzeichnet ist. Dabei begrenzen im Standardfall (= Straßenabschnitt ohne Baustellen-und/oder Gefahrenbereiche) die permanenten Markierungen (MP1 und MP2) die linke Fahrbahn und die permanenten Markierungen (MP2 und MP3) die rechte Fahrbahn. Anfangs befindet sich das Fahrzeug (1) in einem Straßenabschnitt ohne Baustellen-/Gefahrenbereiche. In diesem Straßenabschnitt (= Standardfall) werden mit der Kamera die permanenten Markierungen (MP1 und MP2) erfasst und mit der Bildverarbeitungseinheit erkannt. Dabei wird standardmäßig die relative Lage des Fahrzeuges, insbesondere der Querabstand (d₁, d₂) der Fahrzeugmitte in bezug auf die in Fahrtrichtung linke und rechte Markierung, welche die Fahrbahn begrenzen, bestimmt. Wenn das Fahrzeug sich dann der linken oder rechten Markierung bei Unterschreitung eines vorgegebenen Mindestabstandes nähert oder gar eine Markierung überfährt (berührt), wird im Standardfall automatisch ein Warnsignal für den Fahrer und/oder ein Lenksignal für einen automatischen Lenkeingriff generiert.

Beim Einfahren in den Baustellen-/Gefahrenbereich ist der Fahrer gezwungen, die Soll-Fahrbahn zwischen den beiden permanenten Markierungen zu verlassen und sein Fahrzeug in die korrekte Position auf der durch die veränderte Verkehrsführung veränderten Fahrbahn zu bringen, wobei die Fahrbahn im Baustellen-/Gefahrenbereich durch die temporären Markierungen (MT1 und MT2) begrenzt und gekennzeichnet ist. Im dargestellten Fall ist die Verkehrsführung im Baustellen-/Gefahrenbereich derart, daß das Fahrzeug die temporäre Markierung (MP2) überfahren muß. Im Verfahren gemäß DE 103 11 240 A1 würde die Spurführung im Baustellen-/Gefahrenbereich ausschließlich anhand der beiden temporären Markierungen (MT1 und MT2) erfolgen, wobei der Querabstand (d₁, d₃) der Fahrzeugmitte in Bezug auf die in Fahrtrichtung linke und rechte temporäre Markierung (MT1, MT2) zur Generierung eines Steuersignals für die Querführung des Fahrzeuges verwendet wird. Dies setzt jedoch voraus, daß die temporären Markierungen (MT1 und MT2) als die nunmehr relevanten Markierungen selektiert werden, während die ebenfalls im Erfassungsbereich der Kamera liegenden permanenten Markierungen als irrelevant bewertet werden müssten. Diese Art der Spurführung in Baustellen-/Gefahrenbereichen hat jedoch - wie vorstehend bereits erläutert - einige Nachteile. Im Unterschied zum Verfahren gemäß DE 103 11 240 A1 wird beim erfindungsgemäßen Verfahren zur Spurführung im Baustellen-Gefahrenbereichen ein Markierungsmuster bestehend aus den permanenten und den temporären Markierungen (MT1, MP2, MT2, MP3) verwendet.
Beim Einfahren in den Baustellen-und/oder Gefahrenbereich oder innerhalb einer bestimmten Zeitspanne bzw. Wegstrecke nach dem Einfahren in den Baustellen-und/oder Gefahrenbereich ist eine Initialisierungsphase vorgesehen, in der der Fahrer sein Fahrzeug in die korrekte Position (= Soll-Lage) auf der veränderten Fahrbahn innerhalb des Baustellen-/Gefahrenbereiches bringt. Dabei wird innerhalb der Initialisierungsphase ein Initialisierungs-Markierungsmuster aus permanenten und temporären Markierungen erstellt, das zu der aktuellen Lage des Fahrzeugs bezogen auf die permanenten und temporären Markierungen während der Initialisierungsphase korrespondiert. Dieses Initialisierungs-Markierungsmuster besteht aus der Lage der permanenten und temporären Markierungen im Bild bezogen auf die Bildmittellinie (= Fahrzeugmitte), wobei die Abstände im Initialisierungs-Markierungsmuster durch die Abstände (d₁⁰, d₂⁰ , d₃⁰, d₄⁰) gekennzeichnet.

Wenn das Fahrzeug dann im weiteren Straßenverlauf des Baustellen-und/oder Gefahrenbereiches z.B. durch Unachtsamkeit des Fahrers von der Soll-Lage abkommt, so ändert sich dementsprechend das aktuelle Markierungsmuster, d.h. die Lage der Markierungen im Bild, da sich selbstverständlich auch der von Kamera erfasste Bereich ändert. Erfindungsgemäß wird dann das Steuersignal für die Querführung des Fahrzeuges im Baustellen-und/oder Gefahrenbereich aus einer Abweichung des aktuellen Markierungsmusters - charakterisiert durch die Abstände (d₁, d₂, d₃, d₄) - vom Initialisierungs-Markierungsmuster - charakterisiert durch die Abstände (d₁⁰, d₂⁰, d₃⁰, d₄⁰). abgeleitet.

Unter einer Abweichung des aktuellen Markierungsmusters vom Initialisierungs-Markierungsmuster ist also auch eine Verschiebung des Initialisierungs-Markierungsmusters im Bild, insbesondere relativ zur Bildmitte, zu verstehen.

Bei einem leicht gekrümmten Fahrbahnverlauf im Baustellen-/Gefahrenbereich ist es durchaus vorgesehen, daß Initialisierungs-Markierungsmuster an den leicht gekrümmten Fahrbahnverlauf zu adaptieren, indem geringfügige Abweichungen unterhalb einer bestimmten Schwelle nicht zu einem Warnsignal führen, sondern zu einer Anpassung des Initialisierungs-Markierungsmusters. Damit zufällige, kurzfristige Schwankungen /Abweichungen nicht zu einer fehlerhaften Anpassung führen, ist es vorgesehen, daß auch geringfügige Abweichungen nur dann zu einer Anpassung führen, wenn sie im zeitlichen Mittel über einen gewissen Zeitraum bestehen.

In einer Ausführungsform ist es vorgesehen, daß die Initialisierungsphase vom Fahrer des Fahrzeuges aktiviert wird, indem dieser beim Einfahren in den Baustellen-/Gefahrenbereich - und nachdem er das Fahrzeug in der baustellenbedingt geänderten Fahrbahn korrekt positioniert hat - zum Beispiel eine entsprechende Taste am Lenkstockschalter betätigt. Dabei ist es in einer Alternative vorgesehen, daß die Initialisierungsphase bei erstmaliger Tastenbetätigung gestartet wird, wobei vorzugsweise gleichzeitig die Spurführung für den Standardfall ausgeschaltet wird. Bei erneuter Tastenbetätigung wird dann die Initialisierungsphase beendet und gleichzeitig die Spurführung anhand eines Markierungsmuster aktiviert. Alternativ dazu ist es vorgesehen, daß die Initialisierungsphase durch eine einmalige Tastenbetätigung gestartet und dann automatisch nach einer vorgegebenen Zeit abgeschlossen wird.

In einer weiteren Ausführungsform ist es vorgesehen, daß die Initialisierungsphase automatisch aktiviert wird, wenn sich das Fahrzeug im Falle der standardmäßigen Spurführung für eine bestimmte Übergangszeit außerhalb der durch die erkannten permanenten Markierungen begrenzten Fahrbahn befindet. Beim Einfahren in einen Baustellen-/Gefahrenbereich verlässt das Fahrzeug die Fahrbahn, welche im baustellenfreien Straßenabschnitt durch permanente Markierungen gekennzeichnet ist. Spätestens beim Überfahren der permanenten Markierung (MP2) wird dann ein Warnsignal erzeugt. Beim Einfahren in den Baustellen-/Gefahrenbereich wird der Fahrer auf dieses Warnsignal jedoch nicht in dem Sinne reagieren, daß er das Fahrzeug zurück in die alte Soll-Lage lenkt, sondern in die korrekte Position für die baustellenbedingt geänderte Verkehrsführung bringt. Dabei kann dann eine gewisse Zeit (beispielsweise einige Sekunden) nach der Erzeugung des Warnsignals die Initialisierungsphase automatisch gestartet werden, welche dann ebenfalls automatisch nach einer vorgegebenen Zeit (beispielsweise einige Sekunden) abgeschlossen wird.

In einer weiteren Ausführungsform ist es vorgesehen, daß die Initialisierungsphase automatisch aktiviert wird, wenn neben permanenten Markierungen auch temporäre Markierungen erkannt werden.

Beim Herausfahren aus dem Baustellen-/Gefahrenbereich ändert sich das Markierungsmuster gegenüber dem Initialisierungs-Markierungsmuster sehr stark, bis schließlich keine Ähnlichkeit mehr vorhanden ist. Es ist daher vorgesehen, dass das Herausfahren aus dem Baustellen-/Gefahrenbereich und der Beginn eines normalen Straßenverlaufs automatisch daran erkannt wird, wenn die Abweichung größer als eine vorgegebene Schwelle ist, wobei dann vorzugsweise auch automatisch wieder der Standard-Algorithmus für die Spurführung aktiviert wird.

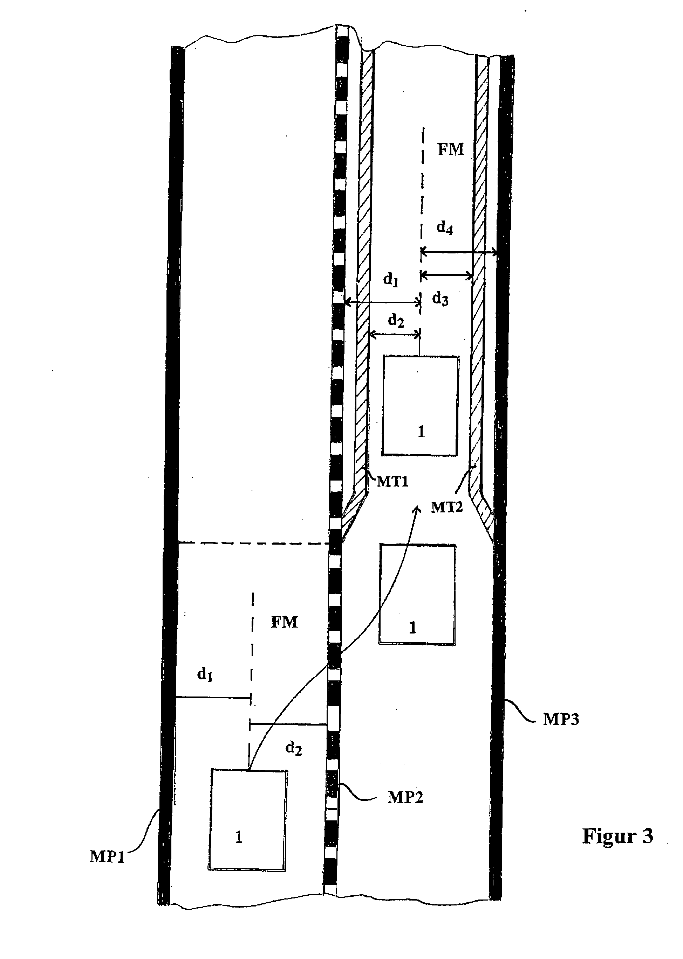

Figur 3 zeigt ebenfalls einen Straßenverlauf im Übergang von einem Straßenabschnitt ohne Baustellen-/Gefahrenbereiche in einen Baustellen-/Gefahrenbereich mit geänderter Verkehrsführung, wobei die durch die temporären Markierungen (MT1, MT2) gekennzeichnete Fahrbahn im Baustellen-/Gefahrenbereich innerhalb der durch die permanenten Markierungen (MP2, MP3) gekennzeichneten Standard-Fahrbahn liegt.

## Patentansprüche

1. Verfahren zur Spurführung eines straßengebundenen Fahrzeugs (1) mit einer an einer definierten Position am Fahrzeug angeordneten Kamera und einer Bildverarbeitungseinheit zur Verarbeitung der mit der Kamera aufgenommenen Bilder, wobei
- sowohl im Standardfall (= Straßenabschnitt ohne Baustellen-und/oder Gefahrenbereiche) als auch im Ausnahmefall (= Baustellen-und/oder Gefahrenbereiche einer Straße) eine Spurführung bewirkt wird,
- im Standardfall permanente Markierungen (MP1, MP2, MP3), welche die Fahrbahnen der Straße begrenzen, erfasst und ausgewertet werden, und in einer Auswerteeinheit aus der relativen Lage des Fahrzeuges (1) in bezug auf die erkannten permanenten Markierungen (MP1, MP2, MP3) ein Steuersignal für die Querführung des Fahrzeuges (1) abgeleitet wird,
**dadurch gekennzeichnet, daß**
im Ausnahmefall neben den permanenten Markierungen (MP1, MP2, MP3) auch temporäre Markierungen (MT1, MT2) im Baustellen- und/oder Gefahrenbereich erfasst und ausgewertet werden, wobei im Ausnahmefall in der Auswerteeinheit das Steuersignal für die Querführung des Fahrzeuges (1) aus der relativen Lage des Fahrzeuges in bezug auf ein Markierungsmuster aus permanenten und temporären Markierungen (MP1, MP2, MP3, MT1, MT2) abgeleitet wird.

2. Verfahren nach einem der vorstehenden Ansprüche, **dadurch gekennzeichnet, daß** beim Einfahren in den Baustellen-und/oder Gefahrenbereich einer Straße oder innerhalb einer bestimmten Zeitspanne oder innerhalb einer bestimmten Wegstrecke nach dem Einfahren in den Baustellen-und/oder Gefahrenbereich einer Straße eine Initialisierungsphase vorgesehen ist, in der ein Initialisierungs-Markierungsmuster aus permanenten und temporären Markierungen (MP1, MP2, MP3, MT1, MT2) erstellt wird, wobei das Markierungsmuster zu der aktuellen Lage des Fahrzeugs bezogen auf die permanenten und temporären Markierungen (MP1, MP2, MP3, MT1, MT2) während der Initialisierungsphase korrespondiert.

3. Verfahren nach Anspruch 2,
**dadurch gekennzeichnet, daß** die Initialisierungsphase vom Fahrer des Fahrzeuges (1) aktiviert wird.

4. Verfahren nach Anspruch 2,
**dadurch gekennzeichnet, daß** die Initialisierungsphase automatisch aktiviert wird.

5. Verfahren nach Anspruch 2,
**dadurch gekennzeichnet, daß** die Initialisierungsphase automatisch aktiviert wird, wenn sich das Fahrzeug (1) im Standardfall für eine bestimmte Übergangszeit außerhalb der durch die erkannten permanenten Markierungen (MP1, MP2, MP3) begrenzten Fahrbahn befindet.

6. Verfahren nach Anspruch 2,
**dadurch gekennzeichnet, daß** die Initialisierungsphase automatisch aktiviert wird, wenn neben permanenten Markierungen (MP1, MP2, MP3) auch temporäre Markierungen (MT1, MT2) erkannt werden.

7. Verfahren nach einem der vorstehenden Ansprüche 2 bis 6,
**dadurch gekennzeichnet, daß** das Steuersignal für die Querführung des Fahrzeuges aus einer Abweichung des aktuellen Markierungsmusters vom Initialisierungs-Markierungsmuster abgeleitet wird.

8. Verfahren nach einem der vorstehenden Ansprüche,
**dadurch gekennzeichnet, dass** ein Markierungsmuster drei oder mehr Markierungen quer zur Fahrzeuglängsrichtung enthält.

9. Verfahren nach einem der vorstehenden Ansprüche, **dadurch gekennzeichnet, daß** das Steuersignal für die Querführung des Fahrzeuges (1) ein Warnsignal für den Fahrer ist.

10. Verfahren nach einem der vorstehenden Ansprüche, **dadurch gekennzeichnet, daß** das Steuersignal für die Querführung des Fahrzeuges (1) ein Lenksignal für eine automatische Lenkung ist.

## Claims

1. Procedure for the track guiding of a road vehicle (1) with a camera arranged in a defined position on the vehicle and an image-processing unit for the processing of the images taken with the camera, wherein
in standard cases (= road section without road works and/ or dangerous sections) as well as in exceptional cases (= road works and/ or dangerous sections of a road) track guiding is effected,
- in standard cases, permanent markings (MP1, MP2, MP3) limiting the lanes of the road are detected and evaluated, and in an evaluation unit, a control signal for the transverse control of the vehicle (1) is derived from the position of the vehicle (1) relative to the detected permanent markings (MP1, MP2, MP3)
**characterized in that**
in exceptional cases, temporary markings (MT1, MT2) in the road works and/ or dangerous section are detected and evaluated in addition to the permanent markings (MP1, MP2, MP3), wherein in exceptional cases, the control signal for the transverse control of the vehicle (1) is derived in the evaluation unit from the position of the vehicle relative to a marking pattern consisting of permanent and temporary markings (MP1, MP2, MP3, MT1, MT2).

2. Procedure according to one of the preceding Claims, **characterized in that** during entering the road works and/or dangerous section of a road or within a defined period of time or within a defined distance after entering the road works and/or dangerous area of a road, an initialization phase is provided, during which an initialization marking pattern consisting of permanent and temporary markings (MP1, MP2, MP3, MT1, MT2) is generated, wherein the marking pattern corresponds to the current position of the vehicle relative to the permanent and temporary markings (MP1, MP2, MP3, MT1, MT2) during the initialization phase.

3. Procedure according to Claim 2,
**characterized in that** the initialization phase is activated by the driver of the vehicle (1).

4. Procedure according to Claim 2,
**characterized in that** the initialization phase is activated automatically.

5. Procedure according to Claim 2,
**characterized in that** the initialization phase is activated automatically
when, in the standard case, the vehicle (1) is situated outside the lane limited by the detected permanent markings (MP1, MP2, MP3) for a defined transition period.

6. Procedure according to Claim 2,
**characterized in that** the initialization phase is activated automatically, when in addition to the permanent markings (MP1, MP2, MP3), temporary markings (MT1, MT2) are also detected.

7. Procedure according to one of the preceding Claims 2 to 6,
**characterized in that** the control signal for the transverse control of the vehicle is derived from a deviation of the current marking pattern from the initialization marking pattern.

8. Procedure according to one of the preceding Claims,
**characterized in that** a marking pattern comprises three or more markings running at right angles to the longitudinal direction of the vehicle.

9. Procedure according to one of the preceding Claims, **characterized in that** the control signal for the transverse control of the vehicle (1) is a warning signal for the driver.

10. Procedure according to one of the preceding Claims, **characterized in that** the control signal for the transverse control of the vehicle (1) is a steering signal for an automatic steering mechanism.

## Revendications

1. Procédé pour le guidage d'un véhicule routier (1) avec une caméra disposée au véhicule sur une position définie et une unité de traitement des images pour traiter les images prise par la caméra,
- produisant un guidage non seulement au cas standard (= segment de route sans chantiers et/ou zones de danger), mais encore au cas exceptionnel (chantiers et/ou zones de danger d'une route),
- saisissant et exploitant au cas standard des marquages permanents (MP1, MP2, MP3) qui limitent les voies de roulement de la route et dérivant un signal de commande pour le guidage transversal du véhicule (1) dans une unité d'évaluation de la position relative du véhicule (1) par rapport aux marquages permanents (MP1, MP2, MP3) reconnus,
**caractérisé en ce qu'**
au cas exceptionnel outre les marquages permanents (MP1, MP2, MP3) également des marquages temporaires (MT1, MT2) aux chantiers et/ou zones de danger sont saisis et exploités, dérivant le signal de commande pour le guidage transversal du véhicule (1) au cas exceptionnel dans l'unité d'évaluation de la position relative du véhicule par rapport à un motif de marquages des marquages permanents et temporaires (MP1, MP2, MP3, MT1, MT2).

2. Procédé selon l'une des revendications précédentes, **caractérisé en ce qu'**une phase d'initialisation est prévue lors de l'entrée dans le chantier et/ou la zone de danger d'une route ou dans un laps de temps défini ou dans une distance parcourue définie après l'entrée dans le chantier et/ou la zone de danger d'une route dans laquelle un motif de marquages d'initialisation des marquages permanents et temporaires (MP1, MP2, MP3, MT1, MT2) est établi, le motif de marquages correspondant à la position actuelle du véhicule par rapport aux marquages permanents et temporaires (MP1, MP2, MP3, MT1, MT2) pendant la phase d'initialisation.

3. Procédé selon la revendication 2, **caractérisé en ce que** la phase d'initialisation est activée par le conducteur du véhicule (1).

4. Procédé selon la revendication 2, **caractérisé en ce que** la phase d'initialisation est automatiquement activée.

5. Procédé selon la revendication 2, **caractérisé en ce que** la phase d'initialisation est automatiquement activée lorsque le véhicule (1) se trouve au cas standard pour une période transitoire définie au-delà de la voie de roulement limitée par les marquages permanents reconnus (MP1, MP2, MP3).

6. Procédé selon la revendication 2, **caractérisé en ce que** la phase d'initialisation est automatiquement activée si en plus des marquages permanents (MP1, MP2, MP3) des marquages temporaires (MT1, MT2) sont également reconnus.

7. Procédé selon l'une des revendications 2 à 6, **caractérisé en ce que** le signal de commande pour le guidage transversal du véhicule est dérivé d'une déviation du motif de marquage actuel par rapport au motif de marquage d'initialisation.

8. Procédé selon l'une des revendications précédentes, **caractérisé en ce qu'**un motif de marquage contient trois ou davantage marquages transversaux à la direction longitudinale du véhicule.

9. Procédé selon l'une des revendications précédentes, **caractérisé en ce que** le signal de commande pour le guidage transversal du véhicule (1) est un signal d'alarme au conducteur.

10. Procédé selon l'une des revendications précédentes, **caractérisé en ce que** le signal de commande pour le guidage transversal du véhicule (1) est un signal de pilotage pour un système de pilotage automatique.
